# EUROPÄISCHE PATENTSCHRIFT

(11) **EP 2 143 977 B1**
(45) Veröffentlichungstag und Bekanntmachung des Hinweises auf die Patenterteilung: **25.08.2010**
(21) Anmeldenummer: 09174336.9
(22) Anmeldetag: 28.06.2007
(51) Int. Cl.: F16H 59/38, F16H 59/40, F16H 59/42, F16H 59/46, F16H 61/12

(54) **Verfahren zur Überwachung einer Kraftschlussrichtung eines Fahrzeug-Getriebes nahe Fahrzeugstillstand**
Method for monitoring the rotation direction of a vehicle transmission during frictional connection at almost stillstand
Procédé destiné à la surveillance d'un sens de liaison de friction d'une boîte de vitesse de véhicule à proximité d'un véhicule à l'arrêt

(30) Priorität: 01.07.2006 DE 102006030526
(43) Veröffentlichungstag der Anmeldung: 13.01.2010
(62) Teilanmeldung aus: 07111347.6
(73) Patentinhaber: ZF Friedrichshafen AG, 88038 Friedrichshafen (DE)
(72) Erfinder: Popp, Christian, 88079, Kressbronn (DE); Gierer, Georg, 88079, Kressbronn (DE); Steinhauser, Klaus, 88079, Kressbronn (DE); Schmidt, Thilo, 88074, Meckenbeuren (DE)

(56) Entgegenhaltungen:
- EP-A- 1 297 991
- DE-A1- 10 137 902
- DE-A1- 10 308 218
- DE-A1- 19 733 465
- DE-A1-102004 046 558

## Beschreibung

Die Erfindung betrifft ein Verfahren zur Überwachung der Kraftschlussrichtung eines automatischen oder automatisierten Fahrzeug-Getriebes nahe Fahrzeugstillstand und eingelegter Fahrposition, gemäß dem Oberbegriff des Patentanspruchs 1 und wie es aus dem Dokument DE 10 2004 046558 A1 bekannt ist.

Steigende Anforderungen an die Fahr-, Betriebs- und Bediensicherheit von modernen Kraftfahrzeugen erfordern einen zunehmend höheren Aufwand an Überwachungen von Fahrzuständen des Fahrzeugs. So gehören bei Fahrzeug-Getrieben mit automatischen oder automatisierten Gang- bzw. Übersetzungswechsein die Überwachung von Schlupf im Getriebe zum Stand der Technik. Ein außerhalb von Schaltungen bzw. Übersetzungswechseln auftretender unzulässiger Schlupf im Getriebe wird üblicherweise mittels einer einfachen Plausibilisierungsabfrage von Drehzahl- bzw. Übersetzungsverhältnissen ermittelt. Ein während eines Gang- bzw. Übersetzungswechsels auftretender unzulässiger Schlupf im Getriebe wird üblicherweise mittels Überwachung von Drehzahlverläufen oder einzuhaltenden Drehzahl- bzw. Übersetzungs-Toleranzbändern ermittelt. In beiden Fällen wird hierzu üblicherweise die Signale von Drehzahlsensoren am Getriebeeingang und am Getriebeausgang ausgewertet. Ein Automatgetriebe mit einem im Kraftfluss zwischen dem Antriebsmotor des Fahrzeugs und dem Getriebe angeordneten Drehmomentwandler als Anfahrelement beispielsweise weist üblicherweise am Getriebeeingang einen so genannten Turbinendrehzahlsensor und am Getriebeausgang einen so genannten Abtriebsdrehzahlsensor auf. Um einen Schlupf im Getriebe überhaupt bestimmen zu können, sind in jedem Fall messbare Mindestdrehzahlen erforderlich, die von dem jeweils vorhandenen Drehzahlerfassungssystem (Sensortyp, Impulsfolge bzw. Impulsabstand) abhängig sind. Das bedeutet, dass nach dem Stand der Technik das Fahrzeug in jedem Fall mit einer gewissen Mindestgeschwindigkeit rollen muss, damit für die Gang- bzw. Übersetzungsüberwachung verwertbare Messsignale vorliegen.

Der vorliegenden Erfindung liegt die Aufgabe zugrunde, ein Verfahren darzustellen, mittels dem nahe Fahrzeugstillstand überwacht wird, ob eine vom Fahrer des Fahrzeugs eingelegte bzw. vorgegebene Fahrtrichtung bzw. Kraftschlussrichtung des Getriebes mit der tatsächlichen Kraftschlussrichtung des Getriebes übereinstimmt.

Erfindungsgemäß gelöst wird diese Aufgabe durch eine Verfahren mit den Merkmalen des Patentanspruchs 1. Vorteilhafte Ausgestaltungen und Weiterbildungen der Erfindung ergeben sich aus den Unteransprüchen.

Erfindungsgemäß wird ein Verfahren zur Überwachung der tatsächlichen Kraftschlussrichtung eines automatischen oder automatisierten Fahrzeug-Getriebes nahe Fahrzeugstillstand und eingelegter Fahrposition vorgeschlagen, bei dem bei Fahrzeugstillstand eine Soll-Kraftschlussrichtung des Getriebes aus der eingelegten Fahrposition ermittelt wird und bei dem bei Fahrzeugstillstand eine tatsächliche Kraftschlussrichtung des Getriebes aus einer sensierten Axialbewegung oder aus einer sensierten Axialkraft eines Bauelementes des Getriebes ermittelt wird, wobei auf einen Fehler geschlossen wird, wenn die Soll-Kraftschlussrichtung und die tatsächliche Kraftschlussrichtung nicht identisch sind.

Dabei kann vorgesehen sein, dass aus der eingelegten Fahrposition eine Soll-Axialbewegung bzw. eine Soll-Axialkraft des Bauelementes bestimmt wird, dass mittels eines ersten Sensors eine tatsächliche Axialbewegung bzw. eine tatsächliche Axialkraft des Bauelementes des Getriebes ermittelt wird, dass die Soll-Axialbewegung und die tatsächliche Axialbewegung bzw. die Soll-Axialkraft und die tatsächliche Axialkraft dieses Bauelementes miteinander verglichen werden und bei einer vordefinierten Abweichung auf einen Fehler geschlossen wird.

Auf einen so erkannten Fehler ist getriebeseitig und/oder fahrzeugseitig mit einer geeigneten Diagnosefunktion zu reagieren.

Der erfindungsgemäßen Lösung liegt die Erkenntnis zugrunde, dass es in Abhängigkeit von dem jeweiligen Radsatzsystem des Getriebes, also in Abhängigkeit von der jeweiligen Kinematik des Getriebes meistens zumindest ein Getriebe-Bauelement gibt, welches eine vorzeichenbehaftete Axialkraft erzeugt, die als Reaktion auf die spezifische Drehmomentverteilung in dem Getriebe je nach tatsächlich vorhandener Drehmomentrichtung variiert. Derartige Bauelemente können beispielsweise sein: ein Radsatzelement - beispielsweise ein Hohlrad - eines schrägverzahnten Planetenradsatzes, ein schrägverzahntes Stirnrad eines Stirntriebs oder ein (mechanisch betätigtes oder druckmittelbetätigtes) Reibschaltelement. Durch die Identifizierung eines Getriebe-Bauelementes, das eine die tatsächliche Kraftschlussrichtung des Getriebes repräsentierende Axialkraft erzeugt, und durch die Überwachung dieser vorzeichenbehafteten Axialkraft oder der vorzeichenbehafteten Axialbewegung an demjenigen Bauelement des Getriebes, welches mit dieser die tatsächliche Kraftschlussrichtung des Getriebes repräsentierenden Axialkraft belastet wird, wird erfindungsgemäß ermittelt, ob die tatsächliche Kraftschlussrichtung des Getriebes übereinstimmt mit der vom Fahrer mittel Fahrstufenwahl vorgegebenen Kraftschlussrichtung bzw. Fahrrichtung.

Eine Axialkraft kann in an sich bekannter Weise beispielsweise mittels handelsüblicher Kraftmesseinrichtungen ermittelt werden, beispielsweise an einer Axiallagerung des Getriebes, die mit einer die tatsächliche Kraftschlussrichtung des Getriebes repräsentierenden Axialkraft belastet ist, oder beispielsweise an einer Abstützfläche eines Lamellenpaketes eines Getriebe-Reibschaltelementes, das mit einer die tatsächliche Kraftschlussrichtung des Getriebes repräsentierenden Axialkraft belastet ist. Eine Axialbewegung kann in an sich bekannter Weise beispielsweise mittels handelsüblicher induktiver Wegmesseinrichtungen oder eines einfachen elektrischen Endlagenschalters ermittelt werden, beispielsweise an einem schrägverzahnten Hohlrad, an einem mit einem Radsatzelement verdrehfest verbundenen Übertragungselement, an einem hydraulisch bzw. pneumatisch betätigten Kolben eines Getriebe-Schaltelementes oder an einer Lamelle bzw. einem Lamellenpaket eines Getriebe-Schaltelementes.

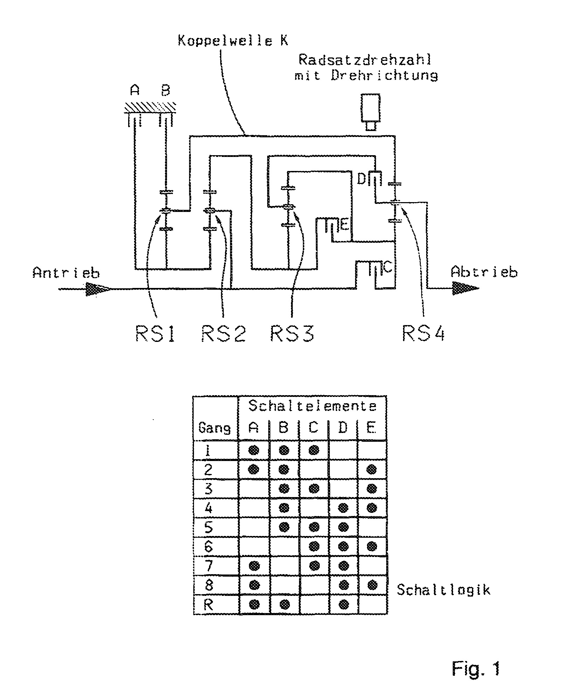

Anhand eines beispielhaften Stufenautomatgetriebes mit acht Vorwärtsgängen und einem Rückwärtsgang, die entsprechend der in Figur 1 dargestellten Schaltlogik schaltbar sind, soll nachfolgend ein Beispiel zur Plausibilisierung der Kraftschlussrichtung im Getriebe mittels Überwachung der Axialbewegung eines Radsatzelementes des Getriebes näher erläutert werden. Bei diesem beispielhaften Automatgetriebe mit vier miteinander gekoppelten Planetenradsätzen RS1, RS2, RS3, RS4 kann in vergleichsweise einfacher Weise an dem schrägverzahnten Hohlrad des vierten Planetenradsatzes RS4 eine Wegmesseinrichtung wie beispielsweise ein induktiver Wegsensor vorgesehen sein, der die tatsächliche Axialbewegung dieses Hohlrades sensiert. Je nach konstruktiv realisierter Verzahnungsrichtung seiner Schrägverzahnung erfährt das genannte Hohlrad infolge der Verdrehelastizitäten und der Axialspiele im Getriebe bei tatsächlicher Getriebe-Kraftschlussrichtung "vorwärts" ein messbare Axialbewegung in Richtung Getriebeabtrieb und bei tatsächlicher Getriebe-Kraftschlussrichtung "rückwärts" ein messbare Axialbewegung in Richtung Getriebeantrieb oder jeweils umgekehrt. Wesentlich ist hierbei, dass sich das genannte Hohlrad bei Getriebe-Kraftschlussrichtung "vorwärts" axial in eine andere Richtung bewegt als bei Getriebe-Kraftschlussrichtung "rückwärts"; der Fachmann wird bei der Definition der vorzeichenbehafteten Soll-Axialbewegung des Hohlrades aus der vom Fahrer vorgegebenen Fahrposition heraus die tatsächlich konstruktiv realisierte Verzahnungsrichtung der Schrägverzahnung des genannten Hohlrades entsprechend berücksichtigen. Somit kann unter Verwendung eines preiswerten handelsüblichen Wegsensors die tatsächliche Kraftschlussrichtung des Getriebes mit dem Fahrerwunsch zuverlässig plausibilisiert werden, ohne dass das Fahrzeug überhaupt anrollt.

Anstelle der Axialbewegung kann sinngemäß auch eine Überwachung der Axialkraft an dem genannten Hohlrad des vierten Planetenradsatzes RS4 bzw. eine Überwachung der durch das schrägverzahnte Hohlrad des vierten Planetenradsatzes RS4 verursachten Axialkraft an einem benachbarten Axiallager vorgesehen sein. Jedoch muss in diesem Fall der für eine derartige Axialkraftmesseinrichtung benötigt Bauraum im Bereich der Axiallagerung berücksichtigt werden, auch ist eine derartige Axialkraftmesseinrichtung gegenüber der zuvor genannten Wegmesseinrichtung am Hohlrad teurer.

Durch die Verwendung von zusätzlichen Informationen im Rahmen der erfindungsgemäßen Funktion können weitere umweltbedingte und fahrsituationsbedingte Einflüsse berücksichtigt werden, die eine Rückwirkung auf die im Rahmen der erfindungsgemäßen fünften Lösung sensierten Axialbewegung bzw. Axialkraft haben. Derartige zusätzliche Informationen können beispielsweise sein: eine Neigungserkennung oder ein Neigungswinkel des Fahrzeugs bzw. der Fahrbahn, ein Bremssignal oder ein Bremsdrucks des Fahrzeugbremssystems, Radmomente an den angetriebenen Rädern des Fahrzeugs.

Die erfindungsgemäße Lösung bzw. das erfindungsgemäße Verfahren ermöglicht in besonders vorteilhafter Weise eine sehr schnelle Erkennung, ob die Fahrrichtung des Fahrzeugs, die sich in Folge des in dem Getriebe des Fahrzeugs tatsächlich eingelegten Gangs bzw. in Folge der in dem Getriebe tatsächlich eingestellten Übersetzung ergibt, abweicht von der Fahrtrichtung des Fahrzeugs, die der Fahrer aufgrund seiner eingelegten Fahrposition vorgegeben hat und erwartet. Der Anrollweg des Fahrzeugs bei Vorliegen eines solchen Fehlers bis zu dessen Erkennung kann durch das erfindungsgemäße Verfahren wirkungsvoll minimiert werden. Die frühzeitige Erkennung eines solchen Fehlers ist ein bedeutender Sicherheitsvorteil beim Betrieb des Fahrzeugs.

Wie bereits zuvor erwähnt, liegt dann, wenn die erfindungsgemäß ermittelte tatsächliche Kraftschlussrichtung des Getriebes nicht mit der vom Fahrer vorgegebenen Kraftschlussrichtung bzw. Fahrtrichtung identisch ist, ein schwerer Fehler entweder im Getriebe selber oder bei der Signalübertragung zwischen der Fahrpositions-Wähleinrichtung und dem Getriebe vor, auf den getriebeseitig und/oder fahrzeugseitig zu reagieren ist. Derartige Maßnahmen können beispielsweise sein:
- Ansteuerung einer für den Fahrer optisch wahrnehmbaren Warnanzeige;
- Ansteuerung eines für den Fahrer akustisch wahrnehmbaren Warnsignals;
- Aktivierung einer Ersatzfunktion des Getriebes, bei der automatisch in einen Gang bzw. in eine Übersetzung gewechselt wird, der die vom Fahrer vorgegebenen Fahrtrichtung zur Folge hat, und bei dem die Schaltelementkombination des Getriebes verboten wird, die den detektierten Fehler verursacht hat;
- Aktivierung eines hydraulischen Notprogramms des Getriebes;
- Unterbrechung des Kraftschlusses im Getriebe;
- Eintrag in einem Fehlerspeicher des Getriebes;
- automatische Betätigung eines Bremssystems oder einer Feststellbremse des Fahrzeugs.

Selbstverständlich können einzelne dieser Maßnamen auch miteinander kombiniert werden.

Auch ist die erfindungsgemäße Ermittlung der tatsächlichen Kraftschlussrichtung des Getriebes nicht auf einen bestimmten Getriebetyp beschränkt, sondern universell in automatischen und automatisierten Getrieben mit elektrohydraulischer oder elektropneumatischer Getriebesteuerung beliebiger Bauart anwenden, insbesondere in Stufenautomatgetrieben mit und ohne Drehmomentwandler als Anfahrelement, in Doppelkupplungsgetrieben, in automatisierten Schaltgetrieben, in mechanisch stufenlos schaltbaren Automatgetrieben ohne und mit Leistungsteilung, in hydrostatisch stufenlos schaltbaren Automatgetrieben ohne und mit Leistungsteilung. Dabei können diese automatischen und automatisierten Getrieben Bestandteil sowohl eines konventionellen Antriebstrangs mit Verbrennungsmotor als alleinige Antriebsmaschine des Fahrzeugs sein, als auch Bestandteil eines Hybridantriebstrangs mit Verbrennungsmotor und Elektromotor als Antriebsmaschinen des Fahrzeugs.

## Patentansprüche

1. Verfahren zur Überwachung einer Kraftschlussrichtung eines automatischen oder automatisierten Fahrzeug-Getriebes nahe Fahrzeugstillstand und eingelegter Fahrposition, wobei bei Fahrzeugstillstand eine Soll-Kraftschlussrichtung des Getriebes aus der eingelegten Fahrposition ermittelt wird,
und auf einen Fehler geschlossen wird, wenn die Soll-Kraftschlussrichtung und die tatsächliche Kraftschlussrichtung nicht identisch sind, **dadurch gekennzeichnet, dass** bei Fahrzeugstillstand eine tatsächliche Kraftschlussrichtung des Getriebes aus einer sensierten Axialbewegung oder aus einer sensierten Axialkraft eines Bauelementes des Getriebes ermittelt wird.

2. Verfahren nach Anspruch 1, **dadurch gekennzeichnet, dass** aus der eingelegten Fahrposition eine Soll-Axialbewegung des Bauelementes bestimmt wird, dass mittels eines ersten Sensors eine tatsächliche Axialbewegung des Bauelementes des Getriebes ermittelt wird, dass die Soll-Axialbewegung und die tatsächliche Axialbewegung dieses Bauelementes miteinander verglichen werden und bei einer vordefinierten Abweichung auf einen Fehler geschlossen wird.

3. Verfahren nach Anspruch 1, **dadurch gekennzeichnet, dass** aus der eingelegten Fahrposition eine Soll-Axialkraft des Bauelementes bestimmt wird, dass mittels eines ersten Sensors eine tatsächliche Axialkraft des Bauelementes des Getriebes ermittelt wird, dass Soll-Axialkraft und die tatsächliche Axialkraft dieses Bauelementes miteinander verglichen werden und bei einer vordefinierten Abweichung auf einen Fehler geschlossen wird.

4. Verfahren nach Anspruch 1, 2 oder 3, **dadurch gekennzeichnet, dass** das Bauelement ein Radsatzelement eines Planetenradsatzes mit Schrägverzahnung des Getriebes ist, insbesondere ein schrägverzahntes Hohlrad.

5. Verfahren nach Anspruch 1, 2 oder 3, **dadurch gekennzeichnet, dass** das Bauelement ein schrägverzahntes Stirnrad eines Stirntriebs des Getriebes ist.

6. Verfahren nach Anspruch 1, 2 oder 3, **dadurch gekennzeichnet, dass** das Bauelement ein Reibschaltelement des Getriebes ist.

7. Verfahren nach einem der vorherigen Ansprüche, **dadurch gekennzeichnet, dass** dann, wenn die ermittelte tatsächliche Kraftschlussrichtung des Getriebes nicht mit der vom Fahrer des Fahrzeugs vorgegebenen Kraftschlussrichtung bzw. Fahrtrichtung identisch ist, als FehlerReaktion eine oder mehrerer der folgenden Funktionen durchgerührt werden:
- Ansteuerung einer für den Fahrer optisch wahrnehmbaren Warnanzeige;
- Ansteuerung eines für den Fahrer akustisch wahrnehmbaren Warnsignals;
- Aktivierung einer Ersatzfunktion des Getriebes, bei der automatisch in einen Gang bzw. in eine Übersetzung gewechselt wird, der die vom Fahrer vorgegebenen Fahrtrichtung zur Folge hat, und bei dem die Schaltelementkombination des Getriebes verboten wird, die den detektierten Fehler verursacht hat;
- Aktivierung eines hydraulischen Notprogramms des Getriebes;
- Unterbrechung des Kraftschlusses im Getriebe;
- Eintrag in einem Fehlerspeicher des Getriebes;
- automatische Betätigung eines Bremssystems oder einer Feststellbremse des Fahrzeugs.

## Claims

1. Method for monitoring a direction of frictional engagement of an automatic or automated vehicle transmission near to the stationary state of the vehicle and with the drive position selected, wherein in the stationary state of the vehicle a setpoint direction of frictional engagement of the transmission is determined from the selected drive position, and a fault is detected if the setpoint direction of frictional engagement and the actual direction of frictional engagement are not identical, **characterized in that** in the stationary state of the vehicle an actual direction of frictional engagement of the transmission is determined from a sensed axial movement or from a sensed axial force of a component of the transmission.

2. Method according to Claim 1, **characterized in that** a setpoint axial movement of the component is determined from the selected drive position, **in that** an actual axial movement of the component of the transmission is determined by means of a first sensor, **in that** the setpoint axial movement and the actual axial movement of this component are compared with one another and when there is a predefined deviation a fault is detected.

3. Method according to Claim 1, **characterized in that** a setpoint axial force of the component is determined from the selected drive position, **in that** an actual axial force of the component of the transmission is determined by means of a first sensor, **in that** the setpoint axial force and the actual axial force of this component are compared with one another, and when there is a predefined deviation a fault is detected.

4. Method according to Claim 1, 2 or 3, **characterized in that** the component is a wheel set element of a planetary gear set with an oblique toothing of the transmission, in particular an obliquely toothed crown gear.

5. Method according to Claim 1, 2 or 3, **characterized in that** the component is an obliquely toothed spur wheel of a spur drive of the transmission.

6. Method according to Claim 1, 2 or 3, **characterized in that** the component is a friction shifting element of the transmission.

7. Method according to one of the preceding claims, **characterized in that** when the actual direction of frictional engagement of the transmission which is determined is not identical to the direction of frictional engagement or driving direction which is predefined by the driver of the vehicle, one or more of the following functions is/are carried out as a fault reaction:
- actuation of a warning display which can be perceived visually by the driver;
- actuation of a warning signal which can be perceived acoustically by the driver;
- actuation of a standby function of the transmission in which changing takes place automatically into a gear speed or a transmission ratio which results in the driving direction predefined by the driver, and in which the shifting element combination of the transmission which has caused the detected fault is prohibited;
- actuation of a hydraulic emergency programme of the transmission;
- interruption of the frictional engagement in the transmission;
- entry in a fault memory of the transmission;
- automatic activation of a brake system or of a parking brake of the vehicle.

## Revendications

1. Procédé de surveillance d'un sens d'adhérence d'une boîte de vitesses automatique ou automatisée de véhicule proche de l'immobilisation du véhicule et avec une position de déplacement engagée, un sens d'adhérence de consigne de la boîte de vitesses étant déterminé lors de l'immobilisation du véhicule à partir de la position de déplacement engagée et une erreur étant déduite si le sens d'adhérence de consigne et le sens d'adhérence réel ne sont pas identiques, **caractérisé en ce que** lors de l'immobilisation du véhicule, un sens d'adhérence réel de la boîte de vitesses est déterminé à partir d'un mouvement axial détecté ou à partir d'une force axiale détectée d'un composant de la boîte de vitesses.

2. Procédé selon la revendication 1, **caractérisé en ce qu'**un mouvement axial de consigne du composant est déterminé à partir de la position de déplacement engagée, qu'un mouvement axial réel du composant de la boîte de vitesses est déterminé au moyen d'un premier capteur, que le mouvement axial de consigne et le mouvement axial réel de ce composant sont comparés entre eux et une erreur est déduite en présence d'un écart prédéfini.

3. Procédé selon la revendication 1, **caractérisé en ce qu'**une force axiale de consigne du composant est déterminée à partir de la position de déplacement engagée, qu'une force axiale réelle du composant de la boîte de vitesses est déterminée au moyen d'un premier capteur, que la force axiale de consigne et la force axiale réelle de ce composant sont comparées entre elles et une erreur est déduite en présence d'un écart prédéfini.

4. Procédé selon la revendication 1, 2 ou 3, **caractérisé en ce que** le composant est un élément de jeu de pignons d'un jeu de pignons planétaire à denture inclinée de la boîte de vitesses, notamment un pignon creux à denture inclinée.

5. Procédé selon la revendication 1, 2 ou 3, **caractérisé en ce que** le composant est une roue droite à denture inclinée d'un pignon droit de la boîte de vitesses.

6. Procédé selon la revendication 1, 2 ou 3, **caractérisé en ce que** le composant est un élément de changement de rapport à friction de la boîte de vitesses.

7. Procédé selon l'une des revendications précédentes, **caractérisé en ce que** lorsque le sens d'adhérence réel déterminé de la boîte de vitesses n'est pas identique au sens d'adhérence ou au sens de déplacement prédéfini par le conducteur du véhicule, une ou plusieurs des fonctions suivantes sont alors exécutées en tant que réaction à l'erreur :
- commande d'un indicateur d'alerte perceptible visuellement par le conducteur ;
- commande d'un indicateur d'alerte perceptible acoustiquement par le conducteur ;
- activation d'une fonction de substitution de la boîte de vitesses, laquelle engage automatiquement un rapport ou une démultiplication qui a pour conséquence le sens de déplacement prédéfini par le conducteur et dans laquelle la combinaison d'éléments de changement de rapport de la boîte de vitesses qui a provoqué l'erreur détectée est interdite ;
- activation d'un programme de secours hydraulique de la boîte de vitesses ;
- interruption de l'adhérence dans la boîte de vitesses ;
- enregistrement dans une mémoire de défauts de la boîte de vitesses ;
- actionnement automatique d'un système de freinage ou d'un frein d'immobilisation du véhicule.
